# EUROPÄISCHE PATENTSCHRIFT

(11) **EP 1 464 430 B1**
(45) Veröffentlichungstag und Bekanntmachung des Hinweises auf die Patenterteilung: **22.10.2008**
(21) Anmeldenummer: 03007411.6
(22) Anmeldetag: 02.04.2003
(51) Int. Cl.: B23H 1/02

(54) **Verfahren und Vorrichtung zum funkenerosiven Bearbeiten eines Werkstückes**
Method and apparatus for electrical discharge machining
Appareil et méthode pour usiner une pièce de travail par électroérosion

(43) Veröffentlichungstag der Anmeldung: 06.10.2004
(73) Patentinhaber: AGIE SA, 6616 Losone (CH)
(72) Erfinder: Boccadoro, Marco, 6653 Verscio (CH); Knaak, Reto, 6612 Ascona (CH); Bonini, Stefano, 6614 Brissago (CH)
(74) Vertreter: Jacoby, Georg

(56) Entgegenhaltungen:
- EP-A- 0 368 833
- WO-A-01/32342
- DE-A- 2 841 596
- US-A- 4 700 038
- US-A- 5 280 153

## Beschreibung

Die vorliegende Erfindung betrifft ein Verfahren und eine Vorrichtung zum funkenerosiven Bearbeiten eines Werkstückes gemäß den Oberbegriffen der Patentansprüche 1 und 10.

Eines der Hauptprobleme beim funkenerosiven Bearbeiten liegt in der Optimierung einerseits der Abtragsleistung der Bearbeitung und andererseits der Oberflächenqualität des zu bearbeitenden Werkstückes. Das bearbeitete Werkstück soll eine bestimmte Endrauheit und eine bestimmte Formpräzision aufweisen. Zusätzlich wird eine möglichst kleine thermisch beeinflußte Zone der Werkstückoberfläche und ein möglichst geringer Elektrodenverschleiß gefordert. Diese Randbedingungen bestimmen die Bearbeitungsdauer und somit die Kosten zur Fertigstellung des Werkstücks.

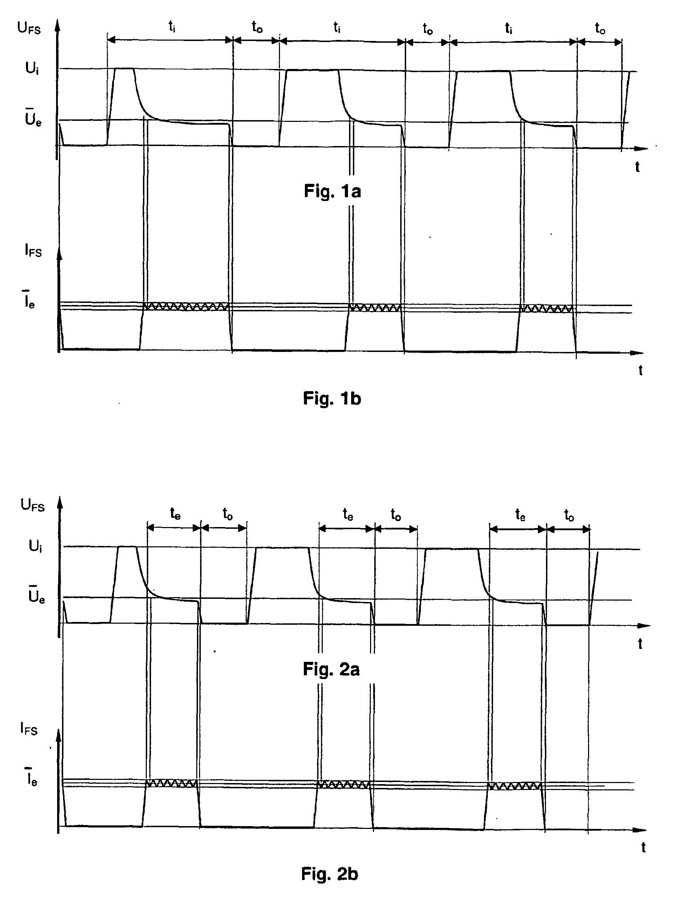

Bei der funkenerosiven Bearbeitung liefert ein Funkenerosionsgenerator Folgen gesteuerter Erosionsimpulse an die Werkzeugelektrode und das Werkstück, die den funkenerosiven Prozeß ermöglichen. Es sind nach dem Stand der Technik folgende Arten von Impulsfolgen üblich:
- Isofrequente Impulsfolgen, wie sie beispielsweise in Fig. 1a gezeigt sind. Dort ist der zeitliche Verlauf der an der Werkzeugelektrode anliegenden Spannung U_{FS} anhand von drei aufeinanderfolgenden Erosionsimpulsen dargestellt. Ein Erosionsimpuls ist durch einen Spannungsanstieg bis auf eine vorgegebene Leerlaufspannung Uᵢ, ein Andauern der konstant gehaltenen Leerlaufspannung Uᵢ bis zum Zünden des Erosionsimpulses, einen Spannungsabfall während der Entladung (mit einer mittleren Entladespannung Uₑ), und ein Unterbrechen der Entladung mit einem Spannungsabfall auf den Wert Null charakterisiert. An einen Erosionsimpuls der Zeitdauer tᵢ schließt sich eine Impulspause tₒ an, bevor ein nächster Erosionsimpuls erzeugt wird. Fig. 1b zeigt den zugehörigen zeitlichen Stromverlauf I_{FS} des während eines Erosionsimpulses an die Werkzeugelektrode fließenden Stromes. Dieser Stromverlauf steigt während der Entladung auf einen konstant gehaltenen mittleren Entladewert Iₑ an und fällt zum Ende des Erosionsimpulses auf Null ab. Bei isofrequenten Impulsfolgen werden die Pulsdauer tᵢ und die Pausendauer tₒ konstant gehalten. Das stochastische Verhalten der Zündverzögerungszeit (die Zeit zwischen dem Anliegen der Leerlaufspannung Uᵢ und dem Anstieg des Stroms bzw. dem Abfall der Leerlaufspannung) ändert bei dieser Methode die Entladeenergie (der Entladestrom wird ebenfalls konstant gehalten) für jeden Stromimpuls, und deshalb den Abtrag, den relativen Verschleiß und die Endrauheit.
- Isoenergetische Impulsfolgen, wie sie beispielsweise in den Fig. 2a und b gezeigt sind, bei denen die Entladedauer tₑ und die Pausendauer tₒ konstant gehalten werden. Hier erreicht man eine bessere Konstanz der technologischen Resultate. Die isoenergetische Bearbeitung erzielt im Vergleich zur isofrequenten Bearbeitung einen kleineren Abtrag, da weniger Erosionsimpulse pro Zeiteinheit für die Bearbeitung verwendet werden.

Beim Stand der Technik zur funkenerosiven Bearbeitung von Werkstücken sind ferner rechteckige oder trapezförmige Stromimpulsformen üblich. Die trapezförmigen Stromimpulse weisen gegenüber den rechteckigen Stromimpulsen zwar den Vorteil auf, daß der Elektrodenverschleiß wegen der geringere Stromdichte in der Aufbauphase des Entladekanals kleiner ist, allerdings auch den Nachteil, daß der Abtrag wegen des geringeren Strom-Zeit-Integrals kleiner ist.

Die PCT-Veröffentlichungsschrift WO 01/32342 versucht die Nachteile der Bearbeitung mit trapezförmigen Stromimpulsen zu beheben, indem nach einer vorbestimmten Zeit ab Entladungsbeginn ein zusätzlicher Stromgenerator zugeschaltet wird, der dem normalen Stromimpuls einen sehr kurzen, dreieckförmigen Stromimpuls hoher Energie überlagert. Die vorbestimmte Zeit wird empirisch ermittelt, und dient dazu, die Stromdichte zu verkleinern, damit der Elektrodenverschleiß gering bleibt. Zwar kann hiermit insbesondere bei der Hartmetallbearbeitung der Abtrag gesteigert werden, jedoch nicht gleichzeitig der Elektrodenverschleiß verkleinert werden, da bei jedem Stromimpuls andere Bedingungen herrschen. Der Erosionsprozeß ist nämlich stochastisch, so daß die Stromdichte für jeden Stromimpuls einem eigenen Gradienten folgt. Ferner ist die Benutzung eines zusätzlichen Generators aufwendig und teurer.

Die US-A-4,700,038 bestimmt den Geschwindigkeitswert des Spannungsabfalls nach Zündung des Arbeitsspaltes und verwendet diesen Wert, um den Materialabtrag einer einzelnen Entladung zu bestimmen und offenbart die Merkmale des Oberbegriffs der Ansprüche 1 und 10. Über die einzelnen Entladungen summiert berechnet sie weiterhin den Elektrodenverschleiß und daraus Parameter zum Einstellen des Erosionsimpulses, wie die Entladedauer, Pulspause, Entladefrequenz, etc.

Die DE-A-28 41 596 beschreibt einen Impulsgenerator mit Kurzschlußdetektion, wobei bei detektiertem Kurzschluß der Erosionsimpuls abgeschaltet wird. Ein Kurzschluß wird detektiert, wenn die Entladespannung innerhalb eines vorgegebenen Zeitintervalls unter die Lichtbogenspannung abgesunken ist.

Der Erfindung liegt die Aufgabe zugrunde, ein Verfahren und eine Vorrichtung zum funkenerosiven Bearbeiten von Werkstücken zu verbessern.

Die Erfindung löst diese Aufgabe jeweils mit den Gegenständen der Ansprüche 1 und 10. Bevorzugte Ausgestaltungen der Erfindung sind in den Unteransprüchen beschrieben.

Die Erfindung sowie weitere Merkmale der Erfindung werden nachfolgend anhand bevorzugter Ausführungsbeispiele mit Bezug auf die beiliegende Zeichnung näher erläutert. In der Zeichnung zeigt:
- Fig. 1: einen zeitlichen Spannungsverlauf (Fig. 1a) und einen zugehörigen zeitlichen Stromverlauf (Fig. 1b) von isofrequenten Stromimpulsfolgen gemäß dem Stand der Technik;
- Fig. 2: einen zeitlichen Spannungsverlauf (Fig. 2a) und einen zugehörigen zeitlichen Stromverlauf (Fig. 2b) von isoenergetischen Stromimpulsfolgen gemäß dem Stand der Technik;
- Fig. 3: einen zeitlichen Spannungsverlauf (Fig. 3a), einen zugehörigen zeitlichen Verlauf der Ableitung des Spannungsverlaufs (Fig. 3b) und einen zugehörigen zeitlichen Stromverlauf (Fig. 3c) eines isogeometrischen Stromimpulses gemäß der vorliegenden Erfindung;
- Fig. 4: eine schematische Prinzipschaltung der Einrichtung zum Unterbrechen des Erosionsimpulses gemäß einem Ausführungsbeispiel der vorliegenden Erfindung;
- Fig. 5: zeitliche Spannungsverläufe von Ausgangsspannungen der in Fig. 4 dargestellten Einrichtung zum Unterbrechen des Erosionsimpulses;
- Fig. 6: einen zeitlichen Spannungsverlauf von Erosionsimpulsen, bei denen die Impulsdauer von der Entladedauer und der Zündzeitverzögerung abhängt, gemäß einem weiteren Ausführungsbeispiel der vorliegenden Erfindung;
- Fig. 7: einen zeitlichen Stromverlauf eines Erosionsimpulses, bei dem der Stromwert vor Unterbrechung des Erosionsimpulses erhöht wird, gemäß einem weiteren Ausführungsbeispiel der vorliegenden Erfindung;
- Fig. 8: einen zeitlichen Stromverlauf eines Erosionsimpulses, bei dem die Einrichtung zum Unterbrechen des Erosionsimpulses nicht mit der im Funkenerosionsgenerator integrierten Stromsteuerung synchronisiert ist, gemäß dem Stand der Technik; und
- Fig. 9: einen zeitlichen Stromverlauf eines Erosionsimpulses, bei dem die Einrichtung zum Unterbrechen des Erosionsimpulses mit der im Funkenerosionsgenerator integrierten Stromsteuerung synchronisiert ist, gemäß einem weiteren Ausführungsbeispiel der vorliegenden Erfindung.

Nachfolgend wird für ein besseres Verständnis der Erfindung und der zu deren Beschreibung verwendeten technischen Begriffe vorab das allgemeine Prinzip der funkenerosiven Bearbeitung anhand der Figuren 1 und 2 beschrieben, die für Erosionsimpulsfolgen gemäß dem Stand der Technik den zeitlichen Verlauf der Spannung U_{FS} und des zugehörigen Stroms I_{FS} zeigen.

Die funkenerosive Bearbeitung von Werkstücken beruht auf dem Abtragen von elektrisch leitenden Werkstoffen, das durch elektrische Entladevorgänge zwischen zwei Elektroden (Werkstück und Werkzeugelektrode) in einem Arbeitsmedium (dielektrische Flüssigkeit) hervorgerufen wird. Das Abtragen wird durch räumlich und zeitlich voneinander getrennte, nicht stationäre Entladungen (Funken) verursacht. Hierzu werden das Werkstück und die Werkzeugelektrode so in Arbeitsposition gebracht, daß zwischen beiden ein Arbeitsspalt verbleibt. Wird nun an die Elektroden eine elektrische Spannung (in Form einer Folge von Erosionsimpulsen) angelegt, so kommt es nach Überschreiten der Durchschlagsfestigkeit des Arbeitsmediums - vorgegeben durch den Elektrodenabstand und die elektrische Leitfähigkeit der dielektrischen Flüssigkeit - zur Bildung einer energiereichen Entladungsstrecke. Geeignete Funkenerosionsgeneratoren liefern die für die Erzeugung der Erosionsimpulse benötigte Energie. Im Stand der Technik werden hierbei vor allem statische Impulsgeneratoren eingesetzt.

Während einer Entladung teilen sich die physikalischen Vorgänge, die zum Abtrag von Werkstoff führen, in drei aufeinanderfolgende Hauptphasen auf, die Aufbau-, Entlade- und Abbauphase. Bei der nachfolgenden Beschreibung dieser drei unterschiedlichen Phasen wird unterstellt, daß Erosionsimpulse mit positiver Spannung an die Werkzeugelektrode angelegt werden und diese somit die Rolle der Anode übernimmt. Selbstverständlich findet die vorliegende Erfindung auch Anwendung für andere Erosionsprozesse, bei denen beispielsweise die Werkzeugelektrode mit negativen Erosionsimpulsen beaufschlagt wird.

Während der Aufbauphase baut sich der Entladekanal zwischen den beiden Elektroden auf. Hierzu wird vom Funkenerosionsgenerator ein Erosionsimpuls mit einem eingestellten Spannungswert an die Elektroden gelegt, der sogenannten Leerlaufspannung Uᵢ, die an der Entladungsstrecke als Höchstwert auftritt, wenn noch kein Strom I_{FS} über den Entladekanal fließt. Die eingestellte Leerlaufspannung Uᵢ bestimmt u.a. die Spaltweite, bei der eine Entladung zünden kann. Nach Ablauf der sogenannten Zündverzögerungszeit ab Anlegen des Erosionsimpulses fließt ein Strom Iₑ fast ausschließlich auf der Mantelfläche des Entladekanals, und die Anode wird durch Elektronenbeschuß teilweise verdampft. Hier findet hauptsächlich der Verschleiß der Werkzeugelektrode statt. Die als Anode wirkende Werkzeugelektrode nimmt nämlich Energie aus den im elektrischen Feld der Entladungsstrecke beschleunigten negativen Elektronen auf. Diese haben eine vergleichsweise geringe Masse, und werden daher innerhalb eines relativ kurzen Zeitraums beschleunigt.

In der Entladephase bewirkt die vom Funkenerosionsgenerator zugeführte elektrische Energie ein Schmelzen bzw. ein Verdampfen von Material hauptsächlich am Werkstück. Die Entladephase wird durch eine zeitabhängige Entladespannung charakterisiert, die an der Entladungsstrecke auftritt, wenn die Entladung gezündet hat und der zugehörige Entladestrom Iₑ fließt. Häufig wird eine mittlere Entladespannung Uₑ definiert, die von der eingesetzten Werkstoffpaarung abhängt und bei den meisten Anwendungsfällen zwischen 15 und 30 V liegt. Der Entladestrom Iₑ läßt sich am Generator auf einen vorgegebenen Wert einstellen. Oftmals wird auch eine Arbeitsspannung als der arithmetische Mittelwert der während der Bearbeitung an der Entladungsstrecke anliegenden Spannung und ein Arbeitsstrom als der arithmetische Mittelwert des während der Bearbeitung durch die Entladungsstrecke fließenden Entladestroms Iₑ definiert. Die Arbeitsspannung und der Arbeitsstrom sind zwei Meßgrößen, die zur Einstellung und Überwachung des Erosionsprozesses herangezogen werden. Die Entladeenergie ist die in der Entladungsstrecke während einer Entladung umgesetzte Energie. Durch sie wird das Volumen der einzelnen Entladungen und darüber hinaus auch im wesentlichen die Ausbildung der erodierten Oberfläche bestimmt.

Die Abbauphase beginnt mit dem Abschalten des Entladestroms Iₑ. Der Plasmakanal bricht zusammen und das teils verdampfte, teils flüssige Material wird ausgeschleudert. Bei einer Bearbeitung mit positiver Polarität findet deshalb der Werkstoffabtrag hauptsächlich während der Abbauphase statt.

Für einen guten Erosionsprozeß sind im Arbeitsspalt ferner Entladebedingungen zu schaffen, die das Auftreten von Kurzschlüssen, Fehlentladungen und Leerlaufimpulsen möglichst ausschließen. Für weitere Details zum funkenerosiven Bearbeiten wird auf Wilfried König - Fritz Klocke " Fertigungsverfahren, Abtragen und Generieren", Springer Verlag, ISBN 3- 540- 63201-8 verwiesen.

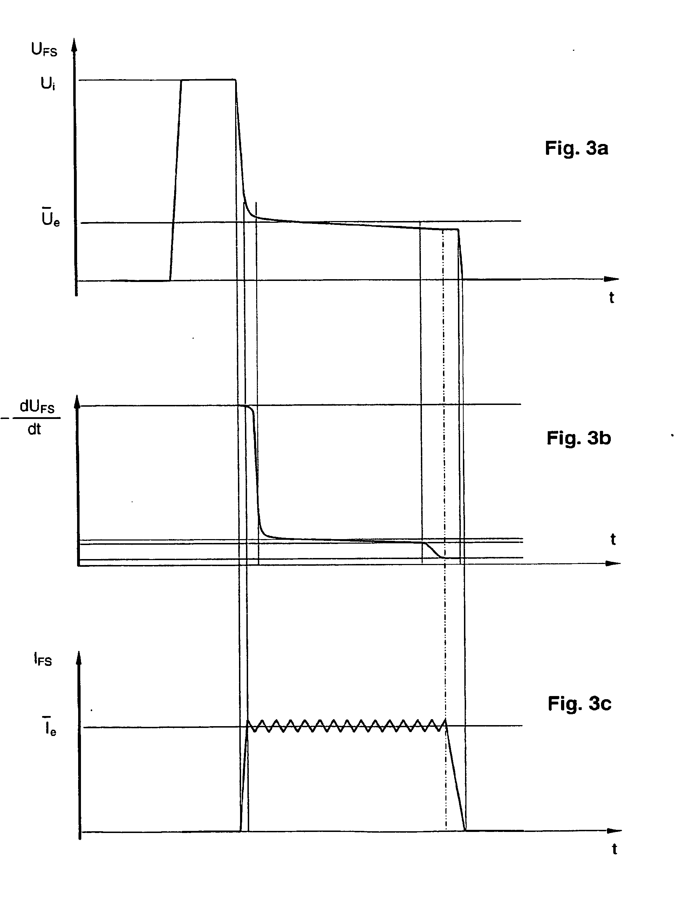

Die Erfindung wird nunmehr mit Bezug auf Figur 3 näher beschrieben, in der Fig. 3a den zeitlichen Verlauf der Spannung U_{FS} eines Erosionsimpulses zeigt, Fig. 3b den zugehörigen Verlauf der zeitlichen Ableitung -dU_{FS}/dt des in Fig. 3a gezeigten Spannungsverlaufes für die Dauer der Entladephase (nach Abfall der Leerlaufspannung Uᵢ auf die Entladespannung Uₑ) und Fig. 3c den zeitlichen Verlauf des zugehörigen an die Werkzeugelektrode fließenden Stromes I_{FS}.

Es ist bekannt, daß der vom Entladeplasma verursachte Entladekrater an der Anode und an der Kathode sich bei Verlängerung der Enladedauer tₑ vergrößert. An der Kathode beginnt der Plasmafußpunkt nach einer gewissen Zeit sogar auf der Kathodenoberfläche zu wandern, und verursacht kleinere Sekundärkrater (siehe Arnd Karden, "Funkenerosive Senkbearbeitung mit leistungssteigernden Elektrodenwerkstoffen und Arbeitsmedien", Band 2/2001, Shaker Verlag, ISBN 3-8265-8392-2). Die Rauheit der bearbeiteten Werkstückoberfläche entspricht dem Radius des Funkenfußpunktes (Daryl di Bitonto et al. "Theoretical models of the electrical discharge machining process.", "I. A simple cathode erosion model" and "II. The anode erosion model", Journal of Applied Physics, Vol. 66, 1989, Nr. 9, S. 4095-4111).

Wegen der Vergrößerung des Durchmessers des Funkenfußpunktes bei Verlängerung der Entladedauer tₑ verringert sich die Stromdichte im Plasmakanal, und damit die Entladespannung zwischen Werkzeugelektrode und Werkstück (siehe Matthias Timm, "Elektronische Stromquelle für das funkenerosive Schneiden von elektrisch schlecht leitfähigen Werkstoffen", Otto-von-Guericke-Universität Magdeburg, 1996, Dissertation, Seiten 30ff.).

Die Erfinder haben erkannt, daß aus der Entladespannung Uₑ abgeleitet werden kann, zu welchem Zeitpunkt der Durchmesser des Funkenfußpunktes sich nicht mehr aufweitet, da ein thermisches Gleichgewicht zwischen der zugeführten Energie und der von der geschmolzenen Halbkugel in das Werkstück abgegebenen Wärmeenergie erreicht ist. Sie haben weiter erkannt, daß der Entladeimpuls nicht länger andauern muß, da die gewünschte Rauheit ab diesem Zeitpunkt erreicht worden ist. Dieser Zeitpunkt ist genau dann erreicht, wenn ein asymptotisches Verhalten der Entladespannung Uₑ vorliegt. Im Falle eines konstant gehaltenen Entladestromes Iₑ ist das asymptotische Verhalten eine im wesentlichen zeitlich konstant verlaufende Entladespannung Uₑ. In bestimmten Fällen kann es einfacher sein, das asymptotische Verhalten aus einer anderen, aus der Entladespannung Uₑ abgeleiteten Größe zu ermitteln.

Diese abgeleitete Größe kann beispielsweise die Entladeleistung sein, die aus dem Produkt der pro Zeiteinheit erfaßten Entladespannung Uₑ und des pro Zeiteinheit fließenden Entladestromes Iₑ bestimmt werden kann. Sie kann auch eine Größe sein, die durch Division der pro Zeiteinheit erfaßten Entladespannung Uₑ durch den pro Zeiteinheit fließenden Entladestrom Iₑ abgeleitet wird. Insgesamt wird unter dem hier verwendeten Begriff "asymptotisches Verhalten" dasjenige Verhalten verstanden, das die Entladespannung Uₑ (bzw. die abgeleitete Größe, wie Entladeleistung) im Gleichgewicht annimmt, bei dem der Kraterdurchmesser beim momentanen fließenden Entladestrom Iₑ im wesentlichen ein Maximum angenommen hat. Zu jedem Entladestrom Iₑ gehört genau ein maximaler Kraterdurchmesser und damit auch eine entsprechende Entladespannung Ue, die sich ggf. erst verzögert einstellt.

In den Fig. 3a-c ist der Zeitpunkt durch die strichgepunktete vertikale Linie angedeutet, zu dem ein asymptotisches Verhalten der Entladespannung Uₑ vorliegt. Für einen konstanten Entladestrom Iₑ ist dieses asymptotische Verhalten, wie oben erwähnt, eine zeitlich konstante Entladespannung Uₑ. Diese zeitliche Konstanz kann beispielsweise über die zeitliche Ableitung -dU_{FS}/dt der Spaltspannung U_{FS} (bzw. Entladespannung Uₑ) ermittelt werden, die beim asymptotischen Verhalten im wesentlichen gleich Null (bzw. kleiner als ein vorgegebener Schwellwert) wird. Unmittelbar vor dem Zeitpunkt, zu dem die zeitliche Ableitung kleiner als ein vorgegebener Schwellwert ist, ist in der Fig. 3 ferner noch ein weiterer Zeitpunkt als durchgezogene vertikale Linie eingezeichnet, ab dem die zeitliche Ableitung -dU_{FS}/dt der Entladespannung Uₑ stark abfällt (es kann auch dieser Zeitpunkt zum Bestimmen des Erreichen des asymptotischen Verhaltens der Entladespannung Uₑ herangezogen werden).

Für eine Kupfer/Stahl-Paarung (Werkzeugelektrode/Werkstück) liegt der asymptotische Wert der Entladespannung Uₑ beispielsweise um die 24 V. Dieser Wert ist jedoch nicht gleich für alle Entladeimpulse und Werkzeugelektrode/Werkstück-Paarungen, da der Spannungsabfall über dem Erosionsspalt beispielsweise vom Entladestrom Iₑ und der Elektrodengeometrie abhängt. Zudem ist eine bekannte Eigenschaft des Erodierprozesses sein zum großen Teil stochastischer Charakter, der durch die sich ständig ändernden physikalischen Verhältnisse im Arbeitsspalt bedingt ist.

Die vom Entladeimpuls benötigte Zeitdauer zum Erreichen dieses Zustandes ist nicht konstant, da die Geschwindigkeit, mit der eine Entladung einen bestimmten Funkenfußpunktdurchmesser erreicht, von der makroskopischen Situation im Spalt und von der lokalen Geometrie im Bereich der Entladungsstrecke abhängt. Wenn zum Beispiel aus der vorangehenden Funkenentladung lokal kurzzeitig geschmolzenes Material zurückbleibt, und die neue Entladung in der Nähe der vorangehenden Entladung erfolgt, dann ist weniger Energie und Zeit aufzuwenden, um den gewünschten Durchmesser zu erreichen.

Vorzugsweise wird der Erosionsprozeß unter Ausnutzung der obigen Erkenntnisse wie folgt optimiert. Vorab wird mit Hilfe empirischer Messungen für vorgegebene Werte des (vorzugsweise konstant gehaltenen) Entladestroms Iₑ die zugehörige Oberflächenrauheit ermittelt, die zu jenem Zeitpunkt erreicht wird, zu dem die Entladespannung Uₑ asymptotisch wird. Diese Wertepaare von Entladestrom Iₑ und Oberflächenrauheit werden im Funkenerosionsgenerator als Technologieparameter gespeichert, damit bei späterem Aufruf einer zu erzielenden Oberflächenrauheit der zugehörige vom Funkenerosionsgenerator einzustellende Entladestrom Iₑ ermittelt werden kann.

Während einer Werkstückbearbeitung werden für jeden Bearbeitungsschritt Folgen von Erosionsimpulsen mit einem vorgegebenen Entladestrom Iₑ zum Erzielen einer gewünschten Bearbeitungsrauhigkeit angelegt. Für jeden Entladeimpuls läßt man den Entladestrom Iₑ dann so lange fließen, bis ein asymptotisches Verhalten der Entladespannung Uₑ ermittelt wird. Zu diesem Zeitpunkt ist die Stromdichte sowie der Elektrodenverschleiß am geringsten. Anschließend wird entweder der Entladeimpuls unterbrochen, oder es wird vor der Unterbrechung wie nachfolgend erläutert vorgegangen (Erhöhung des Entladestroms Iₑ). Bevorzugt kann bei diesen Erosionsimpulsen zudem die Entladedauer (Beginn der Entladung bei Anstieg des Entladestroms Iₑ bis zum Erreichen des asymptotischen Verhaltens der Entladespannung Uₑ) um einen Sicherheitsfaktor erhöht werden. Bei den so erhaltenen Erosionsimpulsen adaptiver Entladedauer kann von isogeometrischen Impulsfolgen gesprochen werden, da die Kratergeometrie konstant ist.

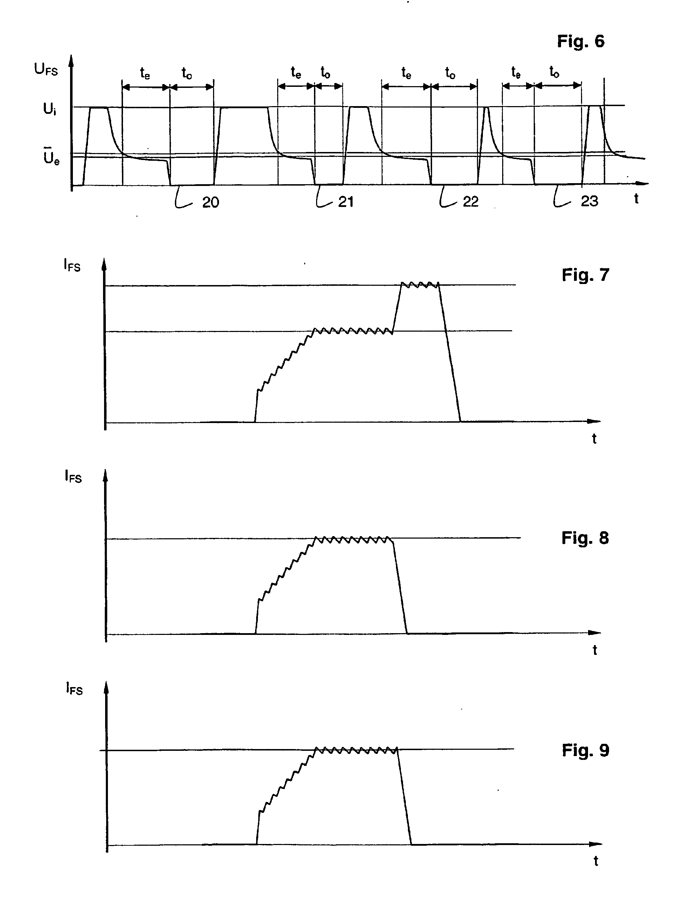

Nach der Unterbrechung des Erosionsimpulses fügt der Funkenerosionsgenerator eine Impulspause ein, die bevorzugt proportional zur abgelaufenen Entladedauer ist. Besonders bevorzugt ist diese Impulspause eine Funktion der Entladedauer und der Zündverzögerungszeit des vorangegangenen Erosionsimpulses. Die Funktion kann so gewählt werden, daß die Impulspause proportional zur Entladedauer ist, wenn die Zündverzögerungszeit des vorhergehenden Erosionsimpuls größer als ein unterer Schwellwert ist, und daß sie ein konstanter Wert ist, wenn die Zündverzögerungszeit den unteren Schwellwert unterschreitet. Fig. 6 zeigt drei Impulspausen 20, 21, 22, deren Dauer tₒ proportional zur vorhergehenden Entladedauer tₑ ist. Die in Fig. 6 gezeigte Pause 23 hat eine Dauer tₒ, die beispielsweise etwa gleich der längsten Pause 22 unter den Pausen 20, 21 und 22 ist. Die Pause 23 ist deshalb größer als beispielsweise die Pausen 20 und 21 gewählt, da bei einer zu kleinen Zündverzögerungszeit das Werkstückmaterial nach der Verdampfung häufig nicht vollständig wiedererstarrt ist. Dies kann zur Metallisation der Elektroden führen, und es besteht die Gefahr einer Lichtbogenerzeugung.

Für die optimale Einstellung der Pausendauer kann ein System mit unscharfer Logik (fuzzy logic) oder ein neuronales Netz verwendet werden, das neben den genannten Eingangsgrößen (Zündverzögerungszeit, Entladedauer tₑ) weitere Eingangsgrößen (z.B. Leitfähigkeit des Spaltes, Kurzschlußhäufigkeit, Prozeßinstabilität, Hochfrequenzrate während der Entladung, etc.) zur Berechnung der Pausendauer heranzieht, da keine einfache Korrelation zwischen den aufgeführten Eingangsgrößen und der Pausendauer vorliegt. Hierzu wird auf die einschlägige Literatur verwiesen, z.B. auf die Dissertation von Dirk F. Dauw, "Online Identification and Optimization of Electro-Discharge Machining", Dissertation Katholieke Universiteit Leuven, 1985.

Mit den vorgenannten Maßnahmen wird gewährleistet, daß jeder Entladeimpuls nur so lange wie nötig dauert, und daß die Anzahl an Erosionsimpulsen pro Zeiteinheit, und damit der Abtrag optimiert wird. Vorteilhaft wird eine höhere Abtragsrate bei reduziertem Werkzeugelektrodenverschleiß, insgesamt ein höherer Werkstoffabtrag pro Erosionsimpuls, ohne Vergrößerung der Oberflächenrauheit und ohne Verschlechterung der übrigen qualitätsbestimmenden Merkmale der Bearbeitung (z.B. Elektrodenverschleiß, Oberflächenqualität, Untermaß, etc.) erzielt. Ein weiterer Vorteil liegt darin, daß die Spaltbreite verhältnismäßig klein bleibt, und somit die geforderten Qualitätsziele früher erreicht werden. Zudem wird vorteilhaft die durch thermische Beanspruchung während der Entladung beschädigte Oberflächenschicht kleiner.

Die genannten Maßnahmen können bevorzugt sowohl zur Schrupp- als auch zur Schlichtbearbeitung eingesetzt werden.

Als weitere Maßnahme kann ein besonderer Stromimpuls verwendet werden, der unmittelbar vor dem Impulsende seine Stromamplitude kurzzeitig erhöht, so daß beim Zusammenbruch des Plasmakanals das kathodenseitige Schmelzbad besser ausgeschleudert wird und der Wirkungsgrad des Auswascheffekts verstärkt wird. Zudem wirkt eine Stromerhöhung am Ende des Entladeimpulses gegen eine mögliche Wiedererstarrung der geschmolzenen Phase am Werkstück, und die thermisch geschädigte Randschicht wird kleiner. Damit wird die Gesamtbearbeitungsdauer kleiner, da bei der nachfolgenden Schlichtbearbeitung weniger Zeit zum Entfernen dieser Randschicht aufgewendet werden muß. Ein solcher Stromimpuls ist schematisch in Fig. 7 dargestellt, bei dem bei Erreichen des asymptotischen Verhaltens der Entladespannung der Entladestrom Iₑ vom Funkenerosionsenerator für eine vorgegebene Zeitdauer auf einen Stromwert erhöht wird, der höher als der Entladestrom Iₑ während der Entladung ist (also vor Erreichen des asymptotischen Verhaltens der Entladespannung Uₑ). Das Verhältnis dieses erhöhten Stromwertes zum "normalen" Entladestrom kann dabei abhängig vom zu erzielenden Ergebnis eingestellt werden.

Weiterhin weist der Stromimpuls des Entladestroms vorzugsweise zu Beginn eine langsam ansteigende Flanke der Stromdichte auf (siehe Stromimpuls in Fig. 7), die in der Entladephase bzw. am Ende der Aufbauphase den Elektrodenverschleiß begrenzt (siehe hierzu beispielsweise die US 5,187,341, deren Offenbarung hierin durch Bezugnahme aufgenommen ist), und zum Ende eine so steil wie möglich abfallende Flanke.

Moderne Funkenerosionsgeneratoren sind, z.B. wie in der US 5,280,153 beschrieben, in getakteter Technik realisiert. Ein einziger Generator kann somit sowohl die langsam ansteigende Stromflanke am Anfang des Stromimpulses, wie auch die Stromerhöhung am Ende liefern, ohne zusätzliche Kosten an die Hardware, da die Steuerung für die Formung der Stromimpulse vorzugsweise in einem FPGA (Field Programmable Gate Array) implementiert wird.

Da der Entladestrom Iₑ oftmals durch Ein- und Ausschalten von Transistoren geregelt wird, die den Entladestrom Iₑ zwischen einer unteren und einer oberen vorgegebenen Hüllkurve halten, entsteht ein Stromimpuls mit einer charakteristischen Stromwelligkeit, wie sie in den Fig. 7 bis 9 dargestellt ist. Die Steilheit der Stromwelligkeitsflanken wird normalerweise nicht zu groß gewählt, um die Schaltfrequenz möglichst niedrig zu halten. Wie bereits oben erwähnt, sollte die abfallende Stromflanke am Ende des Stromimpulses so steil wie möglich sein, um den Werkstoffabtrag zu maximieren und den Auswascheffekt zu begünstigen. Daher wird der Funkenerosionsgenerator derart ausgestaltet, daß das Impulsende zu jenem Zeitpunkt eingeleitet wird, zu dem wie in Fig. 9 dargestellt die Stromamplitude am größten ist. Hiermit wird gewährleistet, daß die Flanke über ihren gesamten Verlauf so steil wie möglich verläuft. Dies wird anhand eines Vergleiches mit der Fig. 8 deutlich, die ein gegenteiliges Beispiel ohne diese spezielle Ausgestaltung des Funkenerosionsgenerators zeigt. Dort wird der Stromimpuls bei einer niedrigen Stromamplitude ausgeschaltet. Betrachtet man die gesamte abfallende Stromflanke in Fig. 9, so beginnt diese mit einem flachen Teilstück und endet erst nach einer bestimmten Zeitdauer (der der halben Periodendauer der Stromwelligkeit entspricht) mit dem steilen Teilstück. Dieser ungünstige Fall führt nur zu einem geringen Auswascheffekt. Ein guter Auswascheffekt ist jedoch erforderlich, um die beim Erosionsprozeß auf der Werkstückoberfläche durch die thermische Beanspruchung entstehende sogenannte weiße Schicht weniger starr und spröde auszubilden. Grundsätzlich verringert eine starre und spröde weiße Schicht die Qualität von Werkstückoberflächen, und damit beispielsweise die Lebensdauer von mit der Funkenerosion hergestellten Stempelwerkzeugen.

Die beiden Maßnahmen einer Stromerhöhung und Gewährleistung einer steilen Abfallflanke können selbstverständlich kombiniert vorgesehen werden.

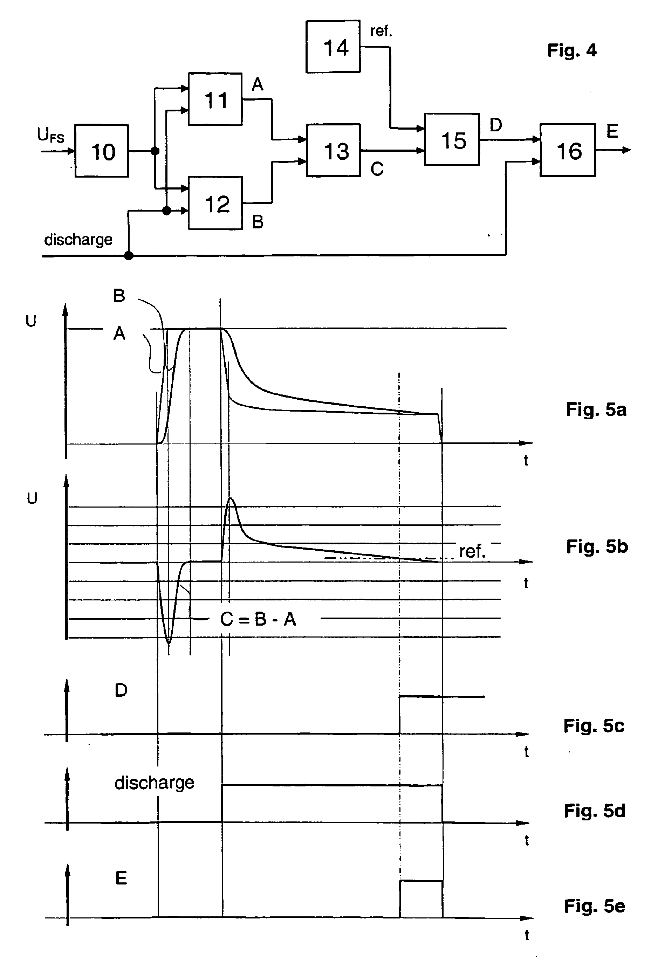

Fig. 4 zeigt eine schematische Prinzipschaltung einer Einrichtung zum adaptiven Unterbrechen des Stromimpulses gemäß einem bevorzugten Ausführungsbeispiel der vorliegenden Erfindung, die zum Erfassen des Zeitpunktes ausgestaltet ist, an dem die Entladespannung Uₑ ihr asymptotisches Verhalten erreicht. Diese Einrichtung ist funktionell in einen Funkenerosionsgenerator integriert, wie er beispielsweise in der US 5,280,153 beschrieben ist, deren Offenbarung hierin durch Bezugnahme aufgenommen ist. Sie umfaßt ein Abschwächerglied 10, das als Eingangssignal die üblicherweise vom Funkenerosionsgenerator erfaßte Spaltspannung U_{FS} (entspricht der Entladespannung Uₑ) erhält und diese Spannung beispielsweise um den Faktor 20 abgeschwächt ausgibt. Die abgeschwächte Spannung wird dann jeweils von zwei parallel geschalteten Tiefpaßfiltern 11 und 12 gefiltert, wobei die Zeitkonstante des Tiefpaßfilters 12 größer als die des Tiefpaßfilters 11 ist.

Die Ausgangssignale der Tiefpaßfilter 11 und 12 werden während der Zündverzögerungszeit auf einen maximalen Wert begrenzt (dieser maximale Wert kann beispielsweise einer Spaltspannung von 40 V entsprechen). Hierzu empfangen die Tiefpaßfilter ein weiteres Steuersignal als Eingangssignal, beispielsweise das vom Funkenerosionsgenerator stammende Signal "discharge", das während der Zündverzögerungszeit einen logisch niedrigen Pegel und während der Entladezeit tₑ einen logisch hohen Pegel hat (d.h. bei Fließen eines Entladestroms). Die ansteigende Flanke dieses Steuersignals kann durch ein Verzögerungsglied etwas verzögert werden, damit sie beispielsweise dem Zeitpunkt entspricht, zu dem der Entladestrom Iₑ bereits einen von Null verschiedenen Wert hat (z.B. den halben Wert des eingestellten maximalen Entladestromes Iₑ oder aber den maximalen Wert). Entsprechend kann das Steuersignal vom Funkenerosionsgenerator auch direkt aus dem Entladestrom Iₑ ermittelt werden, beispielsweise wann dieser seinen halben maximalen oder aber maximalen Wert erreicht hat.

Die Tiefpaßfilter 11 und 12 liefern die in der Fig. 5a dargestellten Ausgangssignale A und B (die obere horizontale Linie stellt den oben erwähnten maximalen Wert dar). Das Signal A stellt die augenblickliche Entladespannung Uₑ dar, bei der lediglich das Rauschen durch entsprechende Einstellung der Zeitkonstante des Tiefpaßfilters 11 eliminiert wurde. Durch entsprechende Einstellung der Zeitkonstante des Tiefpaßfilters 12 ist das Signal B eine stärker gefilterte Variante des Signals A, bei dem vorallem die Übergänge einen weicheren Verlauf haben. Beide Signale A und B werden in einem Operationsverstärker 13 subtrahiert, der ein in Fig. 5b dargestelltes Signal C ausgibt. Sein Verlauf während der Entladephase entspricht im wesentlichen dem Gradient des Aufweitens des Kraters. Während der Leerlaufzeit hat das Signal C Pulsspitzen bei Erreichen der Leerlaufspannung und bei dem darauffolgenden Spannungsabfall. Das Signal C wird dann in einem Komparator 15 mit einem von einem Schwellwertspeicher 14 gelieferten Schwellwert ref. verglichen. Der Komparator 15 liefert ein in Fig. 5c dargestelltes Ausgangssignal D. Das Signal D liegt auf einem logisch niedrigen Pegel, solange das Signal C den Schwellwert ref. überschreitet, und auf einem logisch hohen Pegel im umgekehrten Fall (Fig. 5c zeigt nicht die logisch hohen Pegel, die das Signal D eigentlich auch während der Zündverzögerungszeit annimmt; ggf. könnten diese bereits im Komparator 15 unterdrückt werden, indem dieser auch das Steuersignal "discharge" als Eingangssignal erhält und seinen Ausgang auf einem logisch niedrigen Pegel hält, solange das Steuersignal "discharge" auf einem logisch niedrigen Pegel liegt). Das Signal D wird einem UND-Glied 16 eingegeben, das als weitere Eingabe das Steuersignal "discharge" vom Funkenerosionsgenerator erhält. Das Signal "discharge" liegt - wie erwähnt - auf einem logisch hohen Pegel, solange eine Entladung stattfindet und ein Entladestrom Iₑ fließt. Das UND-Glied 16 liefert ein Ausgangssignal E, das mit einer ansteigenden Flanke vom logisch niedrigen zum logisch hohen Pegel angibt, daß das asymptotische Verhalten der Entladespannung Uₑ erreicht ist, und daß weiter mit einer absteigenden Flanke vom logisch hohen zum logisch niedrigen Pegel angibt, daß die Entladung beendet ist.

Diese spezielle Stromimpulsabschaltung ist sehr einfach in Analogtechnik realisierbar. Natürlich kann sie auch in Digitaltechnik realisiert werden, indem die oben beschriebenen Funktionen ihrer einzelnen Komponenten z.B. in einem sog. FPGA-Baustein (Field Programmable Gate Array, beispielsweise der Firma Xilinx, Inc., 2011 Logic Drive, San Jose, CA 95124) kodiert werden. Alternativ sind auch andere Schaltungsvarianten zum Ermitteln des Zeitpunktes, wann das asymptotische Verhalten der Entladespannung Uₑ erreicht ist, denkbar. Beispielsweise kann ein einfacher entsprechend abgestimmter Hochpaßfilter, dem während der Entladedauer die Entladespannung Uₑ als Eingangsgröße zugeführt wird, einen bei Erreichen eines annähernd zeitlich konstanten Verlaufs der Entladespannung Uₑ signifikanten Ausgangswert liefern.

Die gesamte Entladedauer, deren Beginn mit einer steigenden Flanke des "discharge"-Signals und deren Ende mit einer ansteigenden Flanke des Signals E angezeigt wird, kann vorzugsweise herangezogen werden, um weitere Information (bei einer kurzen Entladedauer wird beispielsweise lediglich eine Spitze erodiert, etc.) über die momentane Erosionsbearbeitung abzuleiten und ggf. weitere Erosionsparameter abhängig von der ermittelten Entladedauer einzustellen.

## Patentansprüche

1. Verfahren zum funkenerosiven Bearbeiten eines Werkstückes mittels einer Werkzeugelektrode, bei dem:
- ein Erosionsimpuls an die Werkzeugelektrode angelegt wird, mit einem auf einen konstanten Wert gesteuerten Entladestrom (Iₑ), der zumindest während eines Abschnitts der Dauer des Erosionsimpulses bei einer Entladung an die Werkzeugelektrode fließt,
- während der Dauer des Erosionsimpulses die an der Werkzeugelektrode anliegende Spannung (Uₑ) erfaßt wird,
**dadurch gekennzeichnet, daß**
- nachdem bei konstant gesteuertem Entladestrom ein zeitlich konstanter Verlauf der erfaßten Spannung (Uₑ) oder einer daraus abgeleiteten Größe, wie die Entladeleistung oder das Verhältnis von erfaßter Spannung zu dabei fließendem Strom, ermittelt wurde, anschließend der Erosionsimpuls unterbrochen wird.

2. Verfahren nach Anspruch 1, bei dem der im wesentlichen zeitlich konstante Verlauf der erfaßten Spannung (Uₑ) als Zeitpunkt ermittelt wird, zu dem die zeitliche Ableitung der erfaßten Spannung (Uₑ) einen vorgegebenen Schwellwert (ref.) unterschreitet.

3. Verfahren nach Anspruch 2, bei dem der Beginn einer Entladung ermittelt wird, und nach Unterbrechen des Erosionsimpuls eine Impulspause mit einer ersten Zeitdauer (t₀) eingelegt wird, die abhängig ist von einer zweiten Zeitdauer (tₑ), die als Zeit zwischen dem Beginn der Entladung und dem Ermitteln des im wesentlichen zeitlich konstanten Verlaufs der erfaßten Spannung (Uₑ) beim vorangehenden Erosionsimpuls definiert ist.

4. Verfahren nach Anspruch 3, bei dem die erste Zeitdauer (t₀) proportional zur zweiten Zeitdauer (tₑ) ist.

5. Verfahren nach Anspruch 3 oder 4, bei dem die erste Zeitdauer (t₀) ferner von einer Zündverzögerungszeit (tᵢ) abhängt, die als Zeit zwischen dem Anlegen des Erosionsimpulses und dem Beginn der Entladung definiert ist.

6. Verfahren nach Anspruch 5, bei dem die erste Zeitdauer (t₀) derart von der Zündverzögerungszeit (tᵢ) abhängt, daß ihr ein Mindestwert zugeordnet wird, sofern die Zündverzögerungszeit (tᵢ) einen zweiten Schwellwert unterschreitet.

7. Verfahren nach einem der vorhergehenden Ansprüche, bei dem der Entladestrom (Iₑ), der während der Dauer eines Erosionsimpulses bei einer Entladung an die Werkzeugelektrode fließt, derart gesteuert wird, daß er während einer dritten Zeitdauer, die nach Ermitteln des im wesentlichen zeitlich konstanten Verlaufs der erfaßten Spannung (Uₑ) beginnt und mit dem Unterbrechen des Erosionsimpulses endet, auf einen vorgegebenen Stromwert erhöht wird.

8. Verfahren nach einem der vorhergehenden Ansprüche, bei dem der Entladestrom (Iₑ), der während der Dauer eines Erosionsimpulses bei einer Entladung an die Werkzeugelektrode fließt, mittels einer unteren und einer oberen vorgegebenen Hüllkurve gesteuert wird, so daß er zwischen diesen beiden Hüllkurven auf- und absteigt, wobei der Erosionsimpuls zu einem Zeitpunkt unterbrochen wird, zu dem der Stromwert des Entladestroms (Iₑ) am größten ist.

9. Verfahren nach einem der Ansprüche 2 bis 8, bei dem weitere Erosionsparameter abhängig von der zweiten Zeitdauer (tₑ) eingestellt werden, die als Zeit zwischen dem Beginn der Entladung und dem Ermitteln des im wesentlichen zeitlich konstanten Verlaufs der erfaßten Spannung (Uₑ) beim vorangehenden Erosionsimpuls definiert ist.

10. Vorrichtung zum funkenerosiven Bearbeiten eines Werkstückes mit einem Funkenerosionsgenerator zum Erzeugen von an die Werkzeugelektrode anzulegenden Erosionsimpulsen, der derart ausgestaltet ist, daß er während der Dauer eines an die Werkzeugelektrode angelegten Erosionsimpulses den Entladestrom (Iₑ), der zumindest während eines Abschnitts der Dauer des Erosionsimpulses bei einer Entladung an die Werkzeugelektrode fließt, auf einen konstanten Wert steuert und die an der Werkzeugelektrode anliegende Spannung (Uₑ) erfaßt, **gekennzeichnet durch** eine mit dem Funkenerosionsgenerator verbundene Einrichtung (10-16), die derart ausgestaltet ist, daß sie den Funkenerosionsgenerator veranlaßt, nachdem sie bei konstant gesteuertem Entladestrom einen im wesentlichen zeitlich konstanten Verlauf der erfaßten Spannung (Uₑ) oder einer daraus abgeleiteten Größe, wie die Entladeleistung oder das Verhältnis von erfaßter Spannung zu dabei fließendem Strom, ermittelt hat, anschließend den Erosionsimpuls zu unterbrechen.

11. Vorrichtung nach Anspruch 10, bei der der Funkenerosionsgenerator derart ausgestaltet ist, daß er den Beginn einer Entladung ermittelt und nach einem unterbrochenen Erosionsimpuls eine Impulspause mit einer ersten Zeitdauer (t₀) einlegt, die abhängig ist von einer zweiten Zeitdauer (tᵢ), die als Zeit zwischen dem Beginn der Entladung und dem Ermitteln des im wesentlichen zeitlich konstanten Verlaufs der erfaßten Spannung (Uₑ) beim vorangehenden Erosionsimpuls definiert ist.

12. Vorrichtung nach Anspruch 10 oder 11, bei der der Funkenerosionsgenerator derart ausgestaltet ist, daß er den Entladestrom (Iₑ), der während der Dauer eines Erosionsimpulses bei einer Entladung an die Werkzeugelektrode fließt, so steuert, daß er während einer dritten Zeitdauer, die nach Ermitteln des im wesentlichen zeitlich konstanten Verlaufs der erfaßten Spannung (Uₑ) beginnt und mit dem Unterbrechen des Erosionsimpulses endet, auf einen vorgegebenen Stromwert erhöht wird.

13. Vorrichtung nach einem der Ansprüche 10 bis 12, bei der der Funkenerosionsgenerator derart ausgestaltet ist, daß er den Entladestrom (Iₑ), der während der Dauer eines Erosionsimpulses bei einer Entladung an die Werkzeugelektrode fließt, mittels einer unteren und einer oberen vorgegebenen Hüllkurve steuert, so daß der Entladestrom (Iₑ) zwischen diesen Hüllkurven auf- und absteigt, und daß er den Erosionsimpuls zu einem Zeitpunkt unterbricht, zu dem der Stromwert des Entladestroms (Iₑ) am größten ist.

## Claims

1. A method for the electrical discharge machining of a workpiece by means of a tool electrode, with which:
- an erosion pulse is applied to the tool electrode, with a discharge current (Iₑ) controlled at a constant value, which current flows to the tool electrode at least during one segment of the duration of the erosion pulse during discharge,
- the voltage (Uₑ) present at the tool electrode is recorded during the duration of the erosion pulse,
**characterised in that**
- the erosion pulse is interrupted after a temporally constant course of the recorded voltage (Uₑ) or a value derived therefrom, such as the discharge power or the ratio of the recorded voltage to the simultaneously flowing current, has been determined with the discharge current controlled at a constant value.

2. A method according to Claim 1,
with which the substantially temporally constant course of the recorded voltage (Uₑ) is determined as the moment when the time derivative of the recorded voltage (Uₑ) falls below a predetermined threshold value (ref.).

3. A method according to Claim 2,
with which the beginning of a discharge is determined, and, after the erosion pulse has been interrupted, a pulse separation period with a first duration (t₀) is inserted, which is dependent upon a second duration (tₑ), which is defined as the time between the beginning of discharge and the determination of the substantially temporally constant course of the recorded voltage (Uₑ) during the preceding erosion pulse.

4. A method according to Claim 3,
with which the first duration (t₀) is proportional to the second duration (tₑ).

5. A method according to Claim 3 or 4,
with which the first duration (t₀) also depends on an ignition delay time (tᵢ), which is defined as the time between the application of the erosion pulse and the beginning of the discharge.

6. A method according to Claim 5,
with which the first duration (t₀) depends on the ignition delay time (tᵢ) in such a manner that a minimum value is assigned thereto, provided that the ignition delay time (tᵢ) falls below a second threshold value.

7. A method according to one of the preceding Claims,
with which the discharge current (Iₑ), which upon discharge flows to the tool electrode during the duration of an erosion pulse, is controlled in such a manner that it is increased to a predetermined current value during a third duration, which starts after the substantially temporally constant course of the recorded voltage (Uₑ) has been determined and ends with the interruption of the erosion pulse.

8. A method according to one of the preceding Claims,
with which the discharge current (Iₑ), which upon discharge flows to the tool electrode during the duration of the erosion pulse, is controlled by means of a lower and an upper envelope so that it rises and falls between these two envelopes, whereby the erosion pulse is interrupted at a moment at which the current value of the discharge current (Iₑ) is at its greatest.

9. A method according to one of Claims 2 to 8,
with which further erosion parameters are set depending on the second duration (tₑ), which is defined as the time between the beginning of the discharge and the determination of the substantially temporally constant course of the recorded voltage (Uₑ) during the preceding erosion pulse.

10. Apparatus for the electrical discharge machining of a workpiece with an electrical discharge generator to generate erosion pulses to be applied to a tool electrode, which generator is configured in such a manner that, during the duration of an erosion pulse applied to the tool electrode, it controls the discharge current (Iₑ), which flows to the tool electrode at least during one segment of the duration of the erosion pulse upon discharge, at a constant value, and which records the voltage (Uₑ) present at the tool electrode,
**characterised by** a device (10-16) connected to the electrical discharge generator, which device is configured in such a manner that it causes the electrical discharge generator to interrupt the erosion pulse after it has determined a substantially temporally constant course of the recorded voltage (Uₑ) or a value derived therefrom, such as the discharge power or the ratio of recorded voltage to simultaneously flowing current, with the discharge current controlled at a constant value.

11. Apparatus according to Claim 10,
with which the electrical discharge generator is configured so that it determines the beginning of a discharge and, after an interrupted erosion pulse, introduces a pulse separation with a first duration (t₀), which depends on a second duration (tᵢ), defined as the time between the beginning of the discharge and the determination of the substantially temporally constant course of the recorded voltage (Uₑ) during the preceding erosion pulse.

12. Apparatus according to Claim 10 or 11,
with which the electrical discharge generator is configured so that it controls the discharge current (Iₑ), which upon discharge flows to the tool electrode during the duration of an erosion pulse, so that it is increased to a predetermined current value during a third duration, which starts after the substantially temporally constant course of the recorded voltage (Uₑ) has been determined and ends with the interruption of the erosion pulse.

13. Apparatus according to one of Claims 10 to 12,
in which the electrical discharge generator is configured so that it controls the discharge current (Iₑ), which upon discharge flows to the tool electrode during the duration of an erosion pulse, by means of a lower and an upper envelopes, so that the discharge current (Iₑ) rises and falls between these envelopes, and so that it interrupts the erosion pulse at a moment when the value of the discharge current (Iₑ) is at its highest.

## Revendications

1. Procédé d'usinage d'une pièce par électroérosion au moyen d'une électrode-outil, dans le cadre duquel :
une impulsion d'érosion est appliquée à l'électrode-outil, avec un courant de décharge (Iₑ) commandé à une valeur constante, qui circule au moins pendant une partie de la durée de l'impulsion d'érosion lors d'une décharge au niveau de l'électrode-outil,
pendant la durée de l'impulsion d'érosion, la tension (Uₑ) appliquée à l'électrode-outil est saisie,
**caractérisé en ce qu'**après détermination, pour un courant de décharge commandé de manière constante, d'une courbe constante dans le temps de la tension saisie (Uₑ) ou d'une grandeur dérivée, telle la puissance de décharge ou le rapport de la tension saisie par rapport au courant circulant ce faisant, l'impulsion d'érosion est ensuite interrompue.

2. Procédé selon la revendication 1, dans le cadre duquel la courbe essentiellement constante dans le temps de la tension saisie (Uₑ) est déterminée comme l'instant où la dérivation temporelle de la tension saisie (Uₑ) devient inférieure à une valeur seuil prescrite (ref.).

3. Procédé selon la revendication 2, dans le cadre duquel le début d'une décharge est déterminé, et après interruption de l'impulsion d'érosion, une pause d'impulsion est marquée avec une première durée (t₀), qui dépend d'une deuxième durée (tₑ), qui est définie comme le temps entre le début de la décharge et la détermination de la courbe essentiellement constante dans le temps de la tension saisie (Uₑ) lors de l'impulsion d'érosion précédente.

4. Procédé selon la revendication 3, dans le cadre duquel la première durée (t₀) est proportionnelle à la deuxième durée (tₑ).

5. Procédé selon la revendication 3 ou 4, dans le cadre duquel la première durée (t₀) dépend en outre d'une temporisation d'amorçage (tᵢ), qui est définie comme le temps entre l'application de l'impulsion d'érosion et le début de la décharge.

6. Procédé selon la revendication 5, dans le cadre duquel la première durée (t₀) dépend de la temporisation d'amorçage (tᵢ) de telle sorte qu'une valeur minimale lui est associée, dans la mesure où la temporisation d'amorçage (tᵢ) est inférieure à une deuxième valeur seuil.

7. Procédé selon l'une quelconque des revendications précédentes, dans le cadre duquel le courant de décharge (Iₑ), qui circule pendant la durée d'une impulsion d'érosion lors d'une décharge au niveau de l'électrode-outil, est commandé de telle sorte qu'il est augmenté à une valeur de courant prescrite, pendant une troisième durée, qui commence après détermination de la courbe essentiellement constante dans le temps de la tension saisie (Uₑ) et se termine avec l'interruption de l'impulsion d'érosion.

8. Procédé selon l'une quelconque des revendications précédentes, dans le cadre duquel le courant de décharge (Iₑ), qui circule pendant la durée d'une impulsion d'érosion lors d'une décharge au niveau de l'électrode-outil, est commandé au moyen d'une enveloppante inférieure et d'une enveloppante supérieure, de sorte qu'il augmente et diminue entre ces deux enveloppantes, l'impulsion d'érosion étant interrompue à un instant où la valeur du courant de décharge (Iₑ) est la plus grande.

9. Procédé selon l'une quelconque des revendications 2 à 8, dans le cadre duquel d'autres paramètres d'érosion sont réglés en fonction de la deuxième durée (tₑ), qui est définie comme le temps entre le début de la décharge et la détermination de la courbe essentiellement constante dans le temps de la tension saisie (Uₑ) lors de l'impulsion d'érosion précédente.

10. Dispositif d'usinage d'une pièce par électroérosion avec un générateur d'érosion par étincelage permettant de produire des impulsions d'érosion à appliquer au niveau de l'électrode-outil qui est réalisé de telle sorte qu'il commande pendant la durée d'une impulsion d'érosion appliquée au niveau de l'électrode-outil, le courant de décharge (Iₑ), qui circule au moins pendant une partie de la durée de l'impulsion d'érosion lors d'une décharge au niveau de l'électrode-outil, à une valeur constante et saisit la tension (Uₑ) appliquée au niveau de l'électrode-outil, **caractérisé par** un équipement (10 - 16) relié au générateur d'érosion par étincelage, lequel équipement est réalisé de telle sorte que, après avoir déterminé pour un courant de décharge commandé de manière constante, une courbe essentiellement constante dans le temps de la tension saisie (Uₑ) ou une grandeur dérivée, telle la puissance de décharge ou le rapport de la tension saisie par rapport au courant circulant ce faisant, il fait que le générateur d'érosion par étincelage interrompe ensuite l'impulsion d'érosion.

11. Dispositif selon la revendication 10, dans le cadre duquel le générateur d'érosion par étincelage est réalisé de telle sorte qu'il détermine le début d'une décharge et marque, après une interruption de l'impulsion d'érosion, une pause d'impulsion avec une première durée (t₀), qui dépend d'une deuxième durée (tᵢ), qui est définie comme le temps entre le début de la décharge et la détermination de la courbe essentiellement constante dans le temps de la tension saisie (Uₑ) lors de l'impulsion d'érosion précédente.

12. Dispositif selon la revendication 10 ou 11, dans le cadre duquel le générateur d'érosion par étincelage est réalisé de telle sorte qu'il commande le courant de décharge (Iₑ), qui circule pendant la durée d'une impulsion d'érosion lors d'une décharge au niveau de l'électrode-outil, de telle sorte qu'il est augmenté à une valeur de courant prescrite pendant une troisième durée, qui commence après détermination de la courbe essentiellement constante dans le temps de la tension saisie (Uₑ) et se termine avec l'interruption de l'impulsion d'érosion.

13. Dispositif selon l'une quelconque des revendications 10 à 12, dans le cadre duquel le générateur d'érosion par étincelage est réalisé de telle sorte qu'il commande le courant de décharge (Iₑ), qui circule pendant la durée d'une impulsion d'érosion lors d'une décharge au niveau de l'électrode-outil, au moyen d'une enveloppante inférieure et d'une enveloppante supérieure, de sorte que le courant de décharge (Iₑ) augmente et diminue entre ces deux enveloppantes, et qu'il interrompt l'impulsion d'érosion à un instant où la valeur du courant de décharge (Iₑ) est la plus grande.
